# EUROPÄISCHE PATENTANMELDUNG

(11) **EP 0 589 360 A2**
(43) Veröffentlichungstag der Anmeldung: **30.03.1994**
(21) Anmeldenummer: 93114944.7
(22) Anmeldetag: 16.09.1993
(51) Int. Cl.: H04N 3/227, H04N 3/185, H02M 3/335

(54) **Horizontalendstufe einer Ablenkschaltung für die Bildröhre eines Bildschirmgerätes**

(30) Priorität: 22.09.1992 DE 4231700
(71) Anmelder: Siemens Nixdorf Informationssysteme Aktiengesellschaft, D-33102 Paderborn (DE)
(72) Erfinder: Lackmann, Johannes, D-33100 Paderborn (DE)
(74) Vertreter: Fuchs, Franz-Josef, Dr.-Ing.

(57) **Zusammenfassung**

In einer Horizontal-Endstufe für die Ablenkschaltung einer Bildröhre wird eine Kaskodeschaltung verwendet, bei der die Sperrverzögerung durch Einprägung eines Stromes betriebsmäßig eingestellt und zur Justierung der Bildlage verwendet wird.

## Beschreibung

Die Erfindung betrifft eine Horizontalendstufe einer Ablenkschaltung für die Bildröhre eines Bildschirmgerätes, mit einem Halbleiterschalter, der abhängig von einem Horizontal-Schaltsignal den Ablenkstrom mindestens einer Horizontalablenkspule der Bildröhre mit einer Schaltverzögerungszeit abschaltet. Ferner betrifft die Erfindung ein Verfahren zum Einstellen der Bildlage einer Zeile bei einem Bildschirmgerät.

Eine derartige Horizontalendstufe verwendet normalerweise als Halbleiterschalter einen Schalttransistor in Emitterschaltung, bei der die Emitterelektrode auf annähernd konstantem Potential liegt. Infolge der Transistorkapazitäten entstehen Schaltverzögerungen, die exemplarabhängig streuen können und eine erhebliche Temperaturabhängigkeit besitzen. Die Schaltverzögerungszeit führt dazu, daß der den Horizontalablenkspulen zugeführte sägezahnförmige Ablenkstrom verzögert abgeschaltet wird. Der Abschaltzeitpunkt definiert indirekt den Beginn einer neuen Sägezahnschwingung des Ablenkstroms und damit die Lage einer Zeile auf dem Bildschirm. Aufgrund der Temperaturabhängigkeit der Schaltverzögerungszeit des Schalttransistors verändert sich beim Aufheizen des Bildschirmgerätes in unerwünschter Weise die Lage der Bildpunkte einer Zeile.

Zur Vermeidung dieses Effektes wird bei bekannten Horizontalendstufen eine Phasenregelung vorgenommen, welche die Schaltverzögerungszeit und damit die Phasenverschiebung zwischen dem Abschaltimpuls des Horizontal-Schaltsignals und dem Abschalten des Schalttransistors auf einen konstanten Wert regelt. Diese Phasenregelung hat verschiedene Nachteile. Sie kann zu Regelschwingungen führen, die auf dem Bildschirm ein Schwingen des Bildes hervorrufen. Außerdem ist der Aufbau einer Phasenregelung sehr aufwendig, da im allgemeinen eine Regelgüte von nur wenigen Nanosekunden erreicht werden muß. In neueren, digital arbeitenden Bildschirmgeräten wird diese Phasenregelung üblicherweise nicht digital, sondern analog durchgeführt, da zum Erreichen der genannten Regelgüte ein zu hoher digitaler Schaltungsaufwand betrieben werden müßte. Die Einbeziehung einer analogen Phasenregelung unter Verwendung eines PLL-Schaltkreises führt aber zu weiteren Problemen, da schaltungstechnisch nicht kompatible Bausteine, d.h. digitale und analoge Bausteine, zusammenwirken müssen.

Es ist Aufgabe der Erfindung, eine Horizontalendstufe anzugeben, bei der die Schaltverzögerungszeit des Halbleiterschalters mit geringem Schaltungsaufwand auf einem konstanten Wert gehalten wird.

Diese Aufgabe wird für eine Horizontalendstufe eingangs genannter Art dadurch gelöst, daß als Halbleiterschalter eine Kaskodeschaltung mit einem Ausgangstransistor und einem Eingangstransistor vorgesehen ist, dem an seiner Steuerelektrode das Horizontal-Schaltsignal zugeführt ist, und daß der Ausgangstransistor an seiner Steuerelektrode mit einem einstellbaren konstanten Strom gespeist ist, der ihn im durchgeschalteten Zustand der Kaskodeschaltung während der Schaltverzögerungszeit in der Nähe seiner Sättigung betreibt.

Die bei der Erfindung verwendete Kaskodeschaltung hat einen Ausgangstransistor, der in Basisschaltung betrieben wird. Diese Basisschaltung hat die Eigenschaft, daß die Schaltverzögerungszeit weitgehend unabhängig von der Temperatur ist. Diese Schaltverzögerungszeit hängt von der Sättigung der Basis des Ausgangstransistors mit Elektronen ab. Bei Elektronenüberschuß nimmt die Schaltzeit zu, d.h. die Zeit vom Auftreten des Abschaltimpulses des Horizontal-Schaltsignals bis zum Beginn des Abschaltens des Ausgangstransistors, da die in der Basis vorhandenen Elektronen abfließen müssen. Durch Ändern des Basisstromes kann somit die Schaltverzögerungszeit des Ausgangstransistors auf einen gewünschten Wert eingestellt werden. Eine aufwendige Phasenregelung, die die Schaltverzögerungszeit auf einen konstanten Wert regelt, kann also entfallen, ohne daß bei Temperaturschwankungen, z.B. beim Aufheizen des Bildschirmgeräts nach dem Einschalten, sich dieser Wert ändert.

Die Schaltverzögerungszeit des Ausgangstransistors bestimmt die gesamte Schaltverzögerungszeit der Kaskodeschaltung. Durch Verstellen des der Steuerelektrode des Ausgangstransistors zugeführten Stroms kann somit der Abschaltzeitpunkt der Kaskodeschaltung relativ zum Abschaltimpuls des Horizontal-Schaltsignals festgelegt werden. Da dieser Abschaltzeitpunkt wie erwähnt die Lage der Bildpunkte einer Zeile auf dem Bildschirm definiert, können diese Bildpunkte durch einfaches Verstellen des Stromes in eine Sollage gebracht werden.

Da der Ausgangstransistor während der Schaltverzögerungszeit in der Nähe seiner Sättigung betrieben wird, ist seine Kollektor-Emitter-Spannung minimal und damit auch seine Verlustleistung. Die Wärmebelastung der elektronischen Bauelemente und der Energieverbrauch des Bildschirmgeräts wird dadurch reduziert.

Bei der Erfindung ist eine aufwendige analoge Phasenregelung nicht erforderlich. Der schaltungstechnische Aufwand bleibt daher klein und die mit einer Phasenregelung verbundenen Störeffekte können nicht auftreten. Da nur wenige analoge Bausteine erforderlich sind, läßt sich die Horizontalendstufe nach der Erfindung leicht in digitale Schaltungskonzepte für Bildschirmgeräte einbeziehen. Insbesondere kann die Horizontalendstufe auch in Mehrfrequenzbildschirmgeräten eingesetzt werden, die mit einer erhöhten Zeilen- und Bildfrequenz arbeiten, ohne daß ein zusätzlicher Schaltungsaufwand erforderlich ist.

Bei einem bevorzugten Ausführungsbeispiel ist eine steuerbare Konstantstromquelle vorgesehen, die den Strom erzeugt, der der Steuerelektrode des Ausgangstransistors zugeführt ist. Durch diese Maßnahme wird auch bei sich ändernder Betriebsspannung eine hohe Störfestigkeit erreicht, da die Konstantstromquelle selbsttätig Spannungsschwankungen der Betriebsspannung ausgleicht.

Bei einer anderen Weiterbildung ist die steuerbare Konstantstromquelle durch einen Digital/Analog-Wandler angesteuert, dessen Digitalwert aus einem nicht flüchtigen Speicher auslesbar ist. Dadurch ist es möglich, die Schaltverzögerungszeit des Ausgangstransistors durch einen Digitalwert festzulegen, der fest im Speicher eines digitalen Bildschirmgeräts abgespeichert ist. Dieser Digitalwert kann in einem Einmeßvorgang ermittelt werden, so daß Exemplarstreuungen des Ausgangstransistors ausgeglichen werden.

Bei einer anderen vorteilhaften Weiterbildung der Erfindung ist eine Abgleichsteuerung vorgesehen, die Horizontalsignale eines vorgegebenen Bildmusters an eine Monitorsteuerung abgibt, die das Horizontal-Schaltsignal erzeugt, daß das von der Bildröhre erzeugte Bild von einem Bildaufnehmer erfaßt wird und in der Abgleichsteuerung mit der Soll-Lage eines Musterbildes verglichen wird, und daß abhängig vom Vergleichsergebnis der Digitalwert ermittelt wird, der im nicht flüchtigen Speicher abgespeichert wird.

Diese Maßnahmen dienen zur Einstellung der Bildlage bei der Endkontrolle in der Fertigung eines Bildschirmgeräts. Die Lage des linken Bildrandes eines Bildes auf dem Bildschirm einer Bildröhre ist unter anderem durch die Schaltverzögerungszeit der Kaskodeschaltung bestimmt. Die Abgleichsteuerung ermittelt durch Vergleich des aktuellen Bildes auf dem Bildschirm mit einem Musterbild den Digitalwert, der einem konstanten Strom entspricht, welcher der Steuerelektrode des Ausgangstransistors der Kaskodeschaltung zugeführt wird. Die Abgleichssteuerung ermittelt diesen Digitalwert vorzugsweise durch ein iteratives Verfahren, bei dem die Schaltverzögerungszeit nach und nach verändert wird, bis die Lage des Bildes mit dem Musterbild übereinstimmt. Bei diesem iterativen Abgleichverfahren wird die Exemplarstreuung in der Schaltverzögerungszeit des Ausgangstransistors ausgeglichen. Bei einem anderen Abgleichverfahren wird der Digitalwert anhand einer Kennlinie ermittelt, durch die der Digitalwert als Funktion der Abweichung der Lage des Bildes von der Soll-Lage vorgegeben ist.

Ein Ausführungsbeispiel der Erfindung wir im folgenden anhand der Zeichnungen erläutert.

Darin zeigt:
- Figur 1: den schematischen Aufbau einer Zeilenablenkstufe mit einer Horizontalendstufe nach der Erfindung, und
- Figur 2: Signalverläufe verschiedener Signale der Horizontalendstufe über der Zeit.

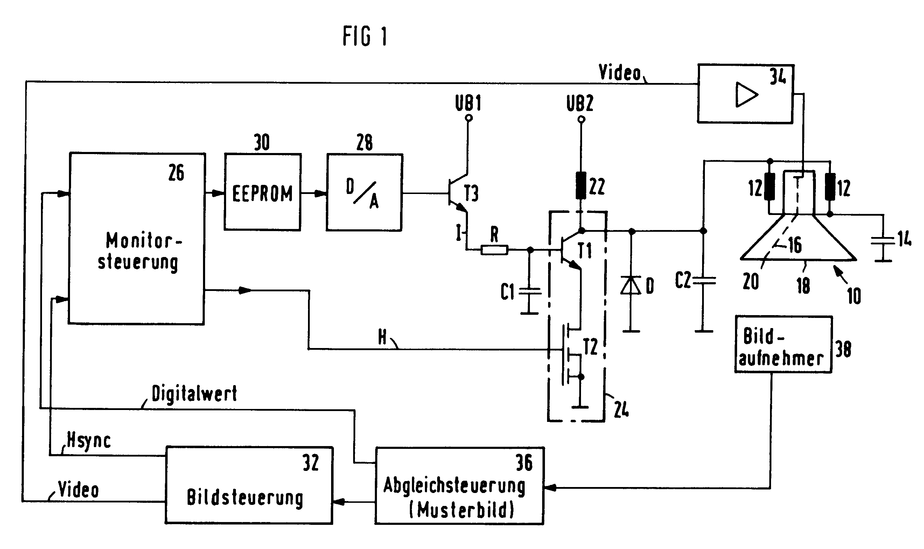

In Figur 1 ist eine Horizontalendstufe nach der Erfindung zusammen mit weiteren Bausteinen eines Bildschirmgerätes dargestellt. Eine Bildröhre 10 hat zwei Horizontalablenkspulen 12, die über einen Tangenskondensator 14 gegen Masse geschaltet sind. Die Horizontalablenkspulen 12 werden von einem sägezahnförmigen Strom durchflossen, der einen Kathodenstrahl 16 auf einem Bildschirm 18, beginnend bei einem linken Bildrand 20, zeilenförmig ablenkt. In Serie zu den Horizontalablenkspulen 12 ist ein Zeilentransformator 22 geschaltet, der an eine einstellbare Betriebsspannung UB2 angeschlossen ist. Der sägezahnförmige Ablenkstrom wird durch eine Kaskodeschaltung 24 erzeugt, die abhängig von einem Horizontal-Schaltsignal H in zwei Zustände geschaltet werden kann, in einen durchgeschalteten Zustand und in einen gesperrten Zustand. Die Kaskodeschaltung 24 besteht aus einem bipolaren Ausgangstransistor T1 und einem MOS-Feldeffekt-Transistor T2. Der Kollektor des Ausgangstransistors T1 ist an die Verbindungsstelle zwischen Zeilentransformator 22 und Horizontalablenkspulen 12 geschaltet. Seine Emitterelektrode ist mit der Drain-Elektrode des Feldeffekt-Transistors T2 verbunden, dessen Source-Elektrode gegen Masse geschaltet ist. Der Gate-Elektrode des Eingangstransistors T2 ist das Horizontal-Schaltsignal H einer digital arbeitenden Monitorsteuerung 26 zugeführt.

Die Basiselektrode des Ausgangstransistors T1 wird über einen Widerstand R aus einem Transistor T3 mit einem einstellbaren konstanten Strom I gespeist. Zwischen der Basiselektrode und dem Widerstand R ist ein Kondensator C1 gegen Masse geschaltet. Er dient zum Glätten der Spannung an der Basiselektrode. Die Kollektorelektrode des Transistors T3 ist mit einer weiteren Betriebsspannung UB1 verbunden. Die Basiselektrode des Transistors T3 ist mit dem Ausgangsanschluß eines Digital/Analog-Wandlers 28 verbunden, der eine analoge Ausgangsspannung entsprechend einem Digitalwert an seinem Ausgangsanschluß ausgibt. Der Digitalwert wird einem nicht flüchtigem Speicher 30 entnommen, der als EEPROM (wiederholt ladbarer NUR-Lesespeicher) ausgebildet ist. Der Digitalwert wird von der Monitorsteuerung 26 in den Speicher 30 eingeschrieben.

Die Kollektorelektrode des Ausgangstransistors T1 ist über eine Rücklaufdiode D und einem zu dieser parallel geschalteten Rücklaufkondensator C2 gegen Masse geschaltet. Die Ablenkspulen 12, der Tangenskondensator 14 und der Rückschlagkondensator D2 bilden einen Resonanzkreis, in welchem die Energie zwischen den Blindkomponenten pendelt. Während der ersten Hälfte des Zeilenhinlaufs ist die Rücklaufdiode D stromleitend, während der zweiten Hälfte die Kaskodenschaltung 24. Die weitere Funktionsweise dieser Schaltungsanordnung, bei der unter anderem während des Zeilenrücklaufs über den Zeilentransformator eine Hochspannung zur Spannungsversorgung der Anode der Bildröhre 10 erzeugt wird, ist an sich bekannt und braucht nicht näher erläutert werden.

Die Monitorsteuerung 26 wird von einer Bildsteuerung 32 mit Synchronisationsimpulsen Hsync versorgt. Diese Bildsteuerung 32 gibt ferner ein Videosignal an einen Videoverstärker 34 ab, der den Kathodenstrahl 16 der Bildröhre 10 moduliert.

Zum Einstellen der Schaltverzögerungszeit der Kaskodeschaltung 24 dient eine mikroprozessorgesteuerte Abgleichsteuerung 36 mit einem Musterbildgenerator und ein Bildaufnehmer 38. Die Abgleichsteuerung 36 ermittelt einen Digitalwert, der über die Monitorsteuerung 26 in den Speicher 30 eingespeichert wird.

Im folgenden wird die Betriebsweise der Schaltungsanordnung nach Figur 1 erläutert. Der Bildmustergenerator der Abgleichsteuerung 36 erzeugt ein Videosignal, das über die Bildsteuerung 32 an den Videoverstärker 34 ausgegeben wird, dessen Signal den Kathodenstrahl 16 moduliert. Die Bildsteuerung 32 gibt ferner Horizontal-Synchronisationssignale Hsync an die Monitorsteuerung 26 ab, die daraus Horizontal-Schaltsignale H erzeugt. Der Eingangstransistor T2 der Kaskodeschaltung 24 wird abhängig von dem Horizontal-Schaltsignal H in den Sperrzustand bzw. Durchlaßzustand geschaltet. Der Ausgangstransistor T1 wird in Basisschaltung mit Konstantstromansteuerung betrieben.

Die Bauelemente T3, R bilden eine Konstantstromquelle, deren Strom I sich aus dem Quotienten aus Spannung an der Basiselektrode des Transistors T3 und Widerstand R ergibt. Dieser Strom I bestimmt die Schaltverzögerungszeit des Ausgangstransistors T1, die wiederum im wesentlichen die Schaltverzögerungszeit der Kaskodeschaltung 24 bestimmt.

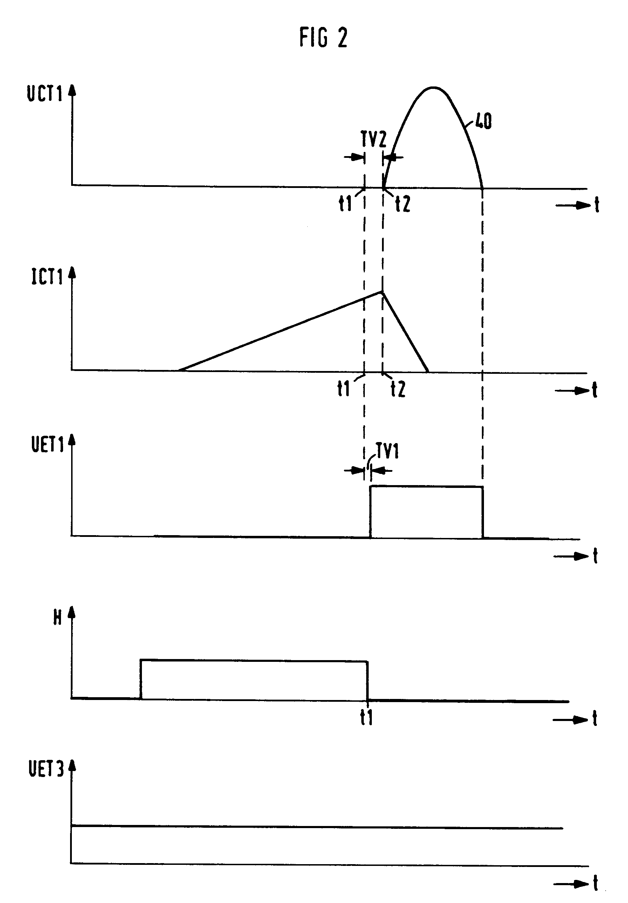

In Figur 2 sind die Verläufe der Spannung UCT1 am Kollektor, des Stroms ICT1 durch den Kollektor sowie der Spannung UET1 am Emitter des Ausgangstransistors T1 über der Zeit t aufgetragen. Ferner sind die Verläufe des Horizontal-Schaltsignals H sowie der Spannung UET3 am Emitter des Transistors T3 über der Zeit angegeben. In der in Fig. 2 dargestellten zweiten Hälfte des Zeilenhinlaufs des Kathodenstrahls 16 liegt das Horizontal-Schaltsignal H auf positivem Spannungspegel und die Kaskodeschaltung 24 befindet sich im durchgeschalteten Zustand. Die Kaskodeschaltung 24 führt den sägezahnförmigen Ablenkstrom, wobei der Strom ICT1 annähernd linear ansteigt. In dieser Phase wird dem Ausgangstransistor T1 an der Basis ein Strom zugeführt, der ihn oberhalb seiner Sättigung betreibt. Dieser Betriebszustand hat keine nachteiligen Wirkungen auf den Betrieb der Kaskodeschaltung 24.

Zum Zeitpunkt t1 wechselt das Horizontal-Schaltsignal H vom positiven Spannungspegel auf Nullpegel, wodurch der Eingangstransistor T2 der Kaskodeschaltung 24 gesperrt wird. Mit einer vernachlässigbaren kleinen Zeitverzögerung TV1 steigt die Spannung UET1 am Emitter des Ausgangstransistors T1 an. Abhängig vom Strom, der der Basiselektrode des Ausgangstransistors T1 über den Transistor T3 zugeführt ist, wird noch eine bestimmte Zeit benötigt, bis die in der Basis des Ausgangstransistors T1 befindlichen Elektronen abfließen, so daß sich eine Gesamtverzögerungszeit TV2 ab der abfallenden Flanke des Horizontal-Schaltsignals H einstellt.

Der Strom ICT1 fällt zum Zeitpunkt t2 steil ab und führt dabei den Kathodensstrahl 16 an seine Anfangsposition am linken Rand 20 des Bildschirms 18 zurück. Die in den Ablenkspulen 12 gespeicherte Energie wird teilweise in den Rücklaufkondensator C2 überführt. Der Zeilenrücklauf-Spannungsimpuls 40 am Kollektor des Ausgangstransistors T1 wird im Zeilentransformator 22 zum Erzeugen einer Hochspannung genutzt.

Die Spannung UET3 am Transistor T3 wird durch den Digital/Analog-Wandler 28 eingestellt. Die Spannung UET3 bleibt über der Zeit t konstant. Ihre Größe ist so gewählt, daß zum Abschaltzeitpunkt t2 in die Basiselektrode des Ausgangstransistors T1 ein Strom I fließt, der entsprechend der Stromverstärkung des Transistors T1 ausreicht, um den Kollektorstrom ICT1 zum Zeitpunkt t1 noch fließen zu lassen und darüber hinaus die gewünschte Schaltverzögerungszeit TV2 zu erzeugen. Der Ausgangstransistor T1 wird somit in einem Sättigungszustand betrieben, bei dem minimale Verlustleistung auftritt.

## Patentansprüche

1. Horizontalendstufe einer Ablenkschaltung für die Bildröhre eines Bildschirmgeräts, mit einem Halbleiterschalter, der abhängig von einem Horizontal-Schaltsignal den Ablenkstrom mindestens einer Horizontalablenkspule der Bildröhre mit einer Schaltverzögerung abschaltet, dadurch **gekennzeichnet**, daß als Halbleiterschalter eine Kaskodeschaltung (24) mit einem Ausgangstransistor (T1) und einem Eingangstransistor (T2) vorgesehen ist, dem an seiner Steuerelektrode das Horizontal-Schaltsignal (H) zugeführt ist, und daß der Ausgangstransistor (T1) an seiner Steuerelektrode mit einem einstellbaren konstanten Strom (I) gespeist ist, der ihn im durchgeschalteten Zustand der Kaskodeschaltung (24) während der Schaltverzögerungszeit (TV2) im Abschaltzeitpunkt in der Nähe seiner Sättigung betreibt.

2. Horizontalendstufe nach Anspruch 1, dadurch **gekennzeichnet**, daß der Sättigungszustand zu Beginn (t1) der Schaltverzögerungszeit (TV2) erreicht ist.

3. Horizontalendstufe nach Anspruch 1 oder 2, dadurch **gekennzeichnet**, daß die Kaskodeschaltung (24) als Eingangstransistor (T2) einen MOS-FET-Transistor und als Ausgangstransistor (T1) einen bipolaren Transistor hat.

4. Horizontalendstufe nach einem der vorhergehenden Ansprüche, dadurch **gekennzeichnet**, daß eine steuerbare Konstantstromquelle (T3, R) vorgesehen ist, die den Strom (I) erzeugt.

5. Horizontalendstufe nach Anspruch 4, dadurch **gekennzeichnet**, daß die steuerbare Konstantstromquelle (T3, R) durch einen Digital/Analog-Wandler (28) angesteuert ist, dessen Digitalwert aus einem nicht flüchtigen Speicher (30) auslesbar ist.

6. Horizontalendstufe nach Anspruch 4 oder 5, dadurch **gekennzeichnet**, daß die Konstantstromquelle einen Transistor (T3) hat, dessen Kollektor mit der konstanten Betriebsspannung (UB1) verbunden ist und dessen Basis durch den Digital/Analog-Wandler (28) angesteuert ist, wobei zwischen dem Emitter des Transistors (T3) und der Basis des Ausgangstransistors (T1) ein Widerstand (R) geschaltet ist.

7. Horizontalendstufe nach Anspruch 6, dadurch **gekennzeichnet**, daß an die Basis des Ausgangstransistors (T1) ein mit Massepotential verbundener Kondensator (C1) geschaltet ist.

8. Horizontalendstufe nach einem der vorhergehenden Ansprüche, dadurch **gekennzeichnet**, daß eine Abgleichsteuerung (36) vorgesehen ist, die Horizontalsignale eines vorgegebenen Bildmusters an eine Monitorsteuerung (26) abgibt, die das Horizontal-Schaltsignal (H) erzeugt, daß das von der Bildröhre (10) erzeugte Bild (20) von einem Bildaufnehmer (38) erfaßt wird und in der Ableichsteuerung (36) mit der Soll-Lage eines Musterbildes verglichen wird, und daß abhängig vom Vergleichsergebnis der Digitalwert ermittelt wird, der im nicht flüchtigen Speicher (30) abgespeichert wird.

9. Verfahren zum Einstellen der Bildlage einer Zeile bei einem Bildschirmgerät unter Verwendung einer Horizontalendstufe nach einem der Ansprüche 1 bis 8, dadurch **gekennzeichnet**, daß dem Ausgangstransistor (T1) der Kaskodeschaltung (24) an der Basiselektrode ein anfänglicher Strom (I) zugeführt wird, daß die Ist-Lage der Zeile auf dem Bildschirm (18) erfaßt wird, und daß abhängig von der Abweichung der Ist-Lage von einer Soll-Lage der Strom (I) verändert wird, bis die Ist-Lage mit der Soll-Lage übereinstimmt.

10. Verfahren nach Anspruch 9, dadurch **gekennzeichnet,** daß der Vergleich der Ist-Lage mit der Soll-Lage durch eine rechnergestützte Bildanalyse erfolgt.
